# EUROPÄISCHE PATENTANMELDUNG

(11) **EP 0 927 735 A1**
(43) Veröffentlichungstag der Anmeldung: **07.07.1999**
(21) Anmeldenummer: 98122780.4
(22) Anmeldetag: 01.12.1998
(51) Int. Cl.: C08G 77/10, C08G 77/26

(54) **Verfahren zur Herstellung von nichtreaktiven Aminosiliconölen**

(30) Priorität: 02.01.1998 DE 19800024; 30.06.1998 DE 19829166
(71) Anmelder: HÜLS AKTIENGESELLSCHAFT, 45764 Marl (DE)
(72) Erfinder: Winkhofer, Norbert Dr., 01612 Nünchritz (DE); Rautschek, Holger Dr., 01612 Nünchritz (DE); Beinert, Maria, 01612 Nünchritz (DE); Jentsch, Leonore, 01612 Grödel (DE)
(74) Vertreter: Olbricht, Gerhard, Dr.

(57) **Zusammenfassung**

Die Erfindung betrifft ein Verfahren zur Herstellung von nichtreaktiven Aminosiliconölen durch basisch katalysierte Äquilibrierung, welche insbesondere als Textilbehandlungsmittel oder in Polishes zur Anwendung kommen.

## Beschreibung

Die Erfindung betrifft ein Verfahren zur Herstellung von nichtreaktiven Aminosiliconölen durch basisch katalysierte Äquilibrierung, welche insbesondere als Textilbehandlungsmittel oder in Polishes zur Anwendung kommen.

Die Herstellung von Aminosiliconölen ist seit langem bekannt. Üblicherweise wird ein Aminosilan mit einem Siloxan in Gegenwart eines basischen Katalysators äquilibriert. Um nichtreaktive Öle zu erhalten, ist dieser Äquilibrierung häufig eine hydrolytische Kondensation des Alkoxygruppen enthaltenden Aminosilans vorangestellt. Dabei sollte das eingesetzte Silan entweder nur ein Si-Atom mit kondensationsfähigen Alkoxygruppen enthalten, da die Gegenwart von mehr als einem solchen Si-Atom ansonsten während der Kondensation zu hochviskosen bis gelartigen Produkten führt, oder es werden sehr milde Kondensationsbedingungen angewandt, was zu einem hohen Si-OH-Gehalt im Endprodukt führt, der sich wiederum ungünstig auf die Lagerstabilität auswirkt.

Ein Verfahren zur Herstellung nichtreaktiver Aminosiliconöle ausgehend von Aminosilanen, welches die hydrolytischen Kondensation als Vorstufe vermeidet, ist beispielsweise in EP 0 269 886 beschrieben. Hierbei werden Amino- und Alkoxygruppen aufweisende, monomere Silane welche nur ein Si-Atom mit kondensationsfähigen Alkoxygruppen enthalten, in einer ersten Stufe mit einem linearen Organopolysiloxan, welches monofunktionellen Einheiten (M-Einheiten) enthält, in Gegenwart eines basischen Katalysators und in Abwesenheit von Wasser äquilibriert, was dazu führt, daß sich die Anzahl der kondensationsfähigen Alkoxygruppen pro Molekül um die Anzahl der eingebauten Siloxaneinheiten reduziert. Das erhaltene Reaktionsprodukt wird dann in einer zweiten Stufe mit Wasser versetzt und einer Hydrolyse-/Kondensationsreaktion unterzogen, um die reaktiven Alkoxygruppen zu entfernen. Das so erhaltene Endprodukt kann dann bei Bedarf abschließend in einer dritten Stufe nochmals einer basisch katalysierten Äqulibrierung mit Organopolysiloxanen unterzogen werden, um die gewünschte Viskosität bzw. den gewünschten Amingehalt im Aminosiliconöl einzustellen. Die Aminogruppen sind im Endprodukt statistisch verteilt.

Das Verfahren hat vor allem den Nachteil, daß in der ersten Stufe wasserfrei gearbeitet werden muß, was unter technologischen Bedingungen nur schwer realisierbar ist.

Aufgabe der Erfindung war es, ein Verfahren zur Herstellung von nichtreaktiven Aminosiliconölen durch basisch katalysierte Kondensation bereitzustellen, welches die hydrolytische Kondensation als Vorstufe zwar vermeidet, es aber gestattet, in Gegenwart von Wasser zu arbeiten und trotzdem als Ausgangsverbindung neben den monomeren Aminosilanen auch dimere Aminosilane zuzulassen, welche zwei Si-Atome mit kondensationsfähigen Alkoxygruppen aufweisen.

Gegenstand der Erfindung ist ein Verfahren zur Herstellung von nichtreaktiven Aminosiliconölen durch basisch katalysierte Kondensation, welches dadurch gekenzeichnet ist, daß
in einer ersten Stufe
mindestens eine siliciumorganische Verbindung der allgemeinen Formel

(R)ₐ(R¹O)₃₋ₐ - Si - (CR²₂)ₘ - [N R³ - (CR²₂)ₙ ]ₚ -NR³₂ (I),

wobei R unabhängig voneinander einwertige, gesättigte und/oder ungesättigte Kohlenwasserstoffreste mit 1 bis 20 Kohlenstoffatomen oder Arylreste mit 6 bis 20 Kohlenstoffatomen, R¹ unabhängig voneinander einwertige Alkylreste mit 1 bis 4 Kohlenstoffatomen, R² unabhängig voneinander gesättigte und/oder ungesättigte, substituierte und/oder unsubstituierte, lineare und/oder cyclische Kohlenwasserstoffreste mit 1 bis 30 Kohlenstoffatomen oder Wasserstoff, R³ unabhängig voneinander Alkyl-, Cycloalkyl- und/oder Arylreste mit 1 bis 20 Kohlenstoffatomen oder (R¹O)ₐ(R²)₃₋ₐ - Si - (CR²₂)ₘ -Gruppierungen bedeutet und a entweder 0 oder 1 ist, m und n unabhängig voneinander Werte von 1 bis 10 annehmen und p entweder 0, 1 oder 2 ist, und/oder dessen Teilhydrolysate mit mindestens einer cyclischen siliciumorganischen Verbindung der allgemeinen Formel

(R₂SiO)ₓ (II)

wobei R die oben angeführte Bedeutung hat und x durchschnittliche Werte zwischen 3 und 10 annimmt,
in Gegenwart eines basischen Katalysators sowie
in Gegenwart mindestens einer OH-Gruppen aufweisenden Verbindung wobei der Gesamtanteil an OH-Gruppen in der ersten Stufe, bezogen auf die in der allgemeinen Formel (I) enthaltenen (R¹O)-Gruppen, maximal 75 Mol-% beträgt,
umgesetzt wird und das erhaltene Reaktionsgemisch
in einer zweiten Stufe
mit mindestens einer siliciumorganischen Verbindung der allgemeinen Formel

R₃SiO(SiR₂)₂SiR₃ (III),

wobei R die oben angeführte Bedeutung hat und z durchschnittliche Werte zwischen 0 und 1.000 annimmt, in Gegenwart von Wasser umgesetzt wird.

Als siliciumorganische Verbindung der allgemeinen Formel (I) wird vorzugsweise die Verbindung der allgemeinen Formel

(R)ₐ(R¹O)₃₋ₐ - Si - (CR²₂)ₘ - [NH - (CR²₂)ₙ]ₚ - NH₂ (IV)

oder die Verbindung der allgemeinen Formel

(R)ₐ(R¹O)₃₋ₐ - Si - (CR²₂)ₘ - [NH - (CR²₂)ₙ ]ₚ - NH - (CR²₂)ₘ - Si (R)ₐ(R¹O)_{b} (V)

oder deren Gemische eingesetzt. Insbesondere werden die bei der technischen Herstellung anfallenden Gemische, bestehend aus 50 bis 97 Gew.-% der Verbindung der allgemeinen Formel (IV) und 3 bis 50 Gew.-% der Verbindung der allgemeinen Formel (V), verwendet.

Verbindungen, welche der allgemeinen Formel (I) entsprechen sind z. B.: (CH₃CH₂O)₂-Si (CH₃)-C₃H₆-NH-C₂H₄-NH-C₄H₉, (CH₃CH₂O)₂-Si (CH₃)-C₃H₆-NH₂, (CH₃O)₂-Si (CH₃)-C₃H₆-NH-C₂H₄-NH-C₂H₄-NH₂, (CH₃O)₂-Si(C₂H₅)-C₂H₄CH(CH₃)-N[CH(CH₃)C₂H₄-Si(CH₂CH₃)(OCH₃)₂]-C₂H₄-NH₂, (CH₃CH₂O)₂-Si (CH₃)-C₃H₆-NH-C₂H₄-NH-cyclo-C₆H₁₁, (i-C₃H₆O)₃-Si -C₂H₄-CH(CH₃)NH-C₂H₄-N(CH₃)₂, (CH₃CH₂O)₂-Si(CH₃)-C₃H₆-NH-C₂H₄-NH-C(CH₃)-C₂H₄-Si-(CH₃CH₂O)₃, (CH₃O)₂-Si (CH₃)-C₃H₆-N (CH₃)-C₂H₄-N (CH₃)-C₃H₆-Si-(CH₃)(CH₃O)₂, (CH₃O)₂-Si (CH₃)-C₃H₆-N H-C₃H₆-Si-(CH₃)(CH₃O)₂ sowie (CH₃O)₂-Si (CH₃)-C₃H₆-N (CH₃)-C₂H₄-N (CH₃)-C₂H₄-N (CH₃)-C₃H₆-Si-(CH₃)(CH₃O)₂.

Vorzugsweise verwendete Verbindungen, welche der allgemeinen Formel (IV) entsprechen sind: CH₃(CH₃O)₂-Si-C₃H₆-NH-C₂H₄-NH₂, CH₃(CH₃O)₂-Si-C₂H₄CH(CH₃)-NH-C₂H₄-NH₂, CH₃(CH₃CH₂O)₂-Si-C₄H₈-NH-C₃H₆-NHC₂H₅, C₂H₅(CH₃O)₂-Si-C₃H₆-NH-C₂H₄-NH₂, CH₃(C₄H₉O)₂-Si-C₃H₆-NH-C₂H₄-NH₂, CH₃(CH₃O)₂-Si-C₃H₆-N(CH₃)-C₂H₄-N(CH₃)₂, CH₃(C₂H₅O)₂-Si-C₂H₄CH(CH₃)-NH-C₂H₄-NH₂, CH₃(CH₃O)₂-Si-C₂H₄CH(CH₃)-NH-C₄H₈-NH₂ sowie CH₃(CH₃O)₂-Si-C₂H₄CH(CH₃)-NH-C₂H₄-NH-C₄H₉.

Vorzugsweise verwendete Verbindungen, welche der allgemeinen Formel (V) entsprechen sind: CH₃(CH₃O)₂-Si-C₃H₆-NH-C₂H₄-NH-C₃H₆-Si-CH₃(CH₃O)₂, CH₃(C₂H₅O)₂-Si-C₃H₆-NH-C₂H₄-NH-C₃H₆-Si-CH₃(C₂H₅O)₂, CH₃(CH₃O)₂-Si-CH₂CH(CH₃)-CH₂-NH-C₂H₄-NH-CH₂-CH(CH₃)-CH₂-Si-CH₃(CH₃O)₂ sowie CH₃(C₂H₅O)₂-Si-CH₂CH(CH₃)-CH₂-NH-C₂H₄-NH-CH₂-CH(CH₃)-CH₂-Si-CH₃(C₂H₅O)₂.

Als Reste R in der allgemeinen Formel (I) sind Methylgruppen bevorzugt. R kann jedoch auch die folgenden Reste darstellen: n-Alkylreste mit 2 bis 20 Kohlenstoffatomen, wie z. B. Ethyl-, Hexyl-, Cyclohexylreste; iso-Alkylreste mit 3 bis 20 Kohlenstoffatomen, wie Isopropyl- und Isoamylreste; Alkylreste mit tertären Kohlenstoffatomen, wie tert.-Butyl- und tert.-Pentylreste; ungesättigte Kohlenwasserstoffreste, wie Allyl oder Vinyl; aromatische Kohlenwasserstoffreste, wie z. B: Phenyl-, Naphthyl-, Anthrylreste; Alkylarylreste, bei denen das Silizium entweder an einen aromatischen Kohlenstoff, wie z. B. bei Tolylresten oder an einen aliphatischen Kohlenstoff, wie z. B. bei Benzylresten, gebunden ist; sowie substituierte Kohlenwasserstoffreste, wie z. B. Trifluorpropyl-, Cyanoethyl-, Alkoxyaryl-, Alkoxyalkyl und Halogenarylreste.

Als Reste R¹ sind gleiche oder verschiedene C₁₋₄-Alkylreste, wobei Methyl- und Ethylreste bevorzugt.

Die Reste R² sind beispielsweise Wasserstoff oder C₁₋₂₀ Alkyl bzw. Aryl, wobei Wasserstoff und Methylrest bevorzugt sind. Besonders bevorzugt ist, wenn mindestens 90% der Reste R² Wasserstoff und bis zu 10% Methyl sind.

Als Reste R³ werden bevorzugt: Wasserstoff oder Kohlenwasserstoffreste, z. B. n-Alkylreste mit 1 bis 20 Kohlenstoffatomen, wie Methyl-, Ethyl-, Butyl-, Hexyl-, Cyclohexylreste; iso-Alkylreste mit 3 bis 20 Kohlenstoffatomen, wie Isopropyl- und Isoamylreste sowie Alkylreste mit tertären Kohlenstoffatomen, wie tert.-Butyl- und tert.-Pentylreste.

Die Herstellung der Verbindungen der allgemeinen Formel (I) erfolgt bekanntermaßen durch nucleophile Substitutionsreaktionen von Halogenalkylreste tragenden Silanen mit Ammoniak oder Aminen. Ein Beispiel ist die Umsetzung von Chlopropylmethyldimethoxysilan mit Ammoniak, Ethylendiamin oder Diethylentriamin. Je nachdem ob eine einfache oder eine mehrfache Umsetzung des Silans mit dem Amin stattfindet (die Tendenz ist abhängig von dem Verhältnis der Ausgangsstoffe) bilden sich Verbindungen entsprechend den allgemeinen Formeln (IV) oder (V). Diese Verbindungen können entweder sofort als Gemisch im erfindungsgemäßen Verfahren eingesetzt werden oder nach destillativer Zrennung als reine Verbindungen oder in Form von gezielt hergestellten Gemischen.

Als cyclische siliciumorganische Verbindung der allgemeinen Formel (II) wird bevorzugt ein Gemisch aus cyclischen Siloxanen der allgemeinen Formel (II) eingesetzt, bei denen x Werte zwischen 3 und 15 annimmt, wobei im Gemisch der durchschnittliche Wert für x 4 bis 6 beträgt. Auch in Formel (II) sind als Reste R Methyl-, Vinyl- und Phenylreste bevorzugt, wobei Methylreste besonders bevorzugt sind. Beispiele für cyclische Siloxane der allgemeinen Formel (II) sind Verbindungen wie Hexamethylcyclotrisiloxan, Octamethylcylotetrasiloxan, Dekamethylcyclopentasiloxan, Dodekamethylcyclohexasiloxan, Tetramethyltetraphenylcyclotetrasiloxan, Tetraamethyltetravinylcylotetrasiloxan, Tetraamethyltetraphenylcylotetrasiloxan. Diese Verbindungen sind bekannt und werden z. B. durch Hydrolyse von Dialkyldichlorsilanen erhalten, wo sie aus dem anfallenden Hydrolysegemisch abgetrennt werden. Eine andere Methode der Herstellung von Verbindungen der allgemeinen Formel (II) ist die sauer oder alkalisch katalysierte Depolymerisation von Polydialkylsiloxanen.

Als basischer Katalysator in der ersten Stufe können alle bekannten, Äquilibrierungsreaktionen katalysierenden Verbindungen eingesetzt werden, beispielsweise Alkali- und/oder Erdalkalihydroxide, wie Lithium-, Natrium-, Kalium-, Cäsium-, Calcium- und/oder Bariumhydroxid, Tetraalkylphosphoniumhydroxide, wie z. B. Tetrabutylphosphoniumhydroxid, und/oder Tetraalkylammoniumhydroxide sowie deren Silanolate und Siloxanolate.

Üblicherweise wird der basische Katalysator in Konzentrationen von 0,001 bis 20 Gew-%, vorzugsweise von 0,05 bis 5 Gew.-%, bezogen auf das Reaktionsgemisch der ersten Stufe, eingesetzt, wobei die Verwendung in Form einer Lösung, üblicherweise in einer Konzentration zwischen 1 und 50 Gew.-%, erfolgen kann. Als Lösemittel ist Wasser bevorzugt, aber es können z. B. auch Alkohole, wie Ethanol, verwendet werden.

Das erfindungsgemäße Verfahren ist ohne Zusatz von Wasser in der ersten Stufe ausführbar, es ist jedoch keinesfalls erforderlich, die Gegenwart von Wasser völlig auszuschließen. In der ersten Stufe des erfindungsgemäßen Verfahrens können OH-Gruppen aufweisende Verbindungen enthalten sein bis zu einem Gesamtanteil an OH-Gruppen von 75 Mol-%, bezogen auf die in der allgemeinen Formel (I) enthaltenen (R¹O)-Gruppen, bevorzugt ist eine Gesamtmenge von 5 bis 20 Mol.-% OH-Gruppen. Als OH-Gruppen aufweisende Verbindung wird üblicherweise Wasser verwendet. So kann beispielsweise der basische Katalysator in Form einer wäßrigen Lösung eingesetzt werden. Als weitere OH-Gruppen aufweisende Verbindungen können beispielsweise oligomere Silanole und/oder Siloxanole, wie der lineare steil des Dimethyldichlorsilan-Hydrolysates, oder Trimethylsilanol eingesetzt werden.

Die Wassermenge, welche in der zweiten Stufe zugesetzt wird, beträgt 0,1 bis 50 Gew.-%, vorzugsweise 1 bis 20 Gew.-%, bezogen auf das Reaktionsgemisch aus der ersten Stufe.

Die in der zweiten Stufe zugegebene siliciumorganische Verbindung der allgemeinen Formel (III) ist ein lineares, bevorzugt ein trimethylsiloxy-terminiertes Polydimethylsiloxan, welches aus D- und M-Einheiten besteht, mit einer Viskosität zwischen 0,65 und 50.000 mPas, bevorzugt zwischen 50 und 500 mPas. Die Verbindungen der allgemeinen Formel (III) werden nach bekannten Verfahren hergestellt, z. B. durch Polymerisation von Verbindungen der Formel (II), wobei der Kettenabtuch durch den Einbau von Trialkylsiloxygruppen erfolgt.

Eine besonders bevorzugte Ausführungsform besteht darin, daß in einer ersten Stufe ein Gemisch aus mindestens einer Verbindung der allgemeinen Formel

(R)ₐ(R¹O)₃₋ₐ - Si - (CR²₂)ₘ - [NH - (CR²₂)ₙ]ₚ - NH₂ (IV)

und mindestens einer Verbindung der allgemeinen Formel

(R)ₐ(R¹O)₃₋ₐ - Si - (CR²₂)ₘ - [NH - (CR²₂)ₙ ]ₚ- NH - (CR²₂)ₘ - Si (R)ₐ(R¹O)_{b} (V)

mit mindestens einer cyclischen siliciumorganischen Verbindung der allgemeinen Formel

(R₂SiO)ₓ (II)

in Gegenwart eines basischen Katalysators umgesetzt
und das erhaltene Reaktionsgemisch
in einer zweiten Stufe
mit 0,1 bis 50 Gew.-% Wasser, bezogen auf das Reaktionsgemisch aus der ersten Stufe.
und mindestens einer siliciumorganischen Verbindung der allgemeinen Formel

R₃SiO(SiR₂)₂SiR₃ (III)

wobei die Reste R und R² Methyl- oder Ethylgruppen bedeuten, R¹ die oben angeführte Bedeutung hat und z Werte zwischen 50 und 500 annimmt, umgesetzt wird. Insbesondere werden auch hierbei die bei der Herstellung des Aminosilans anfallenden Gemische, bestehend aus 50 bis 97 Gew.-% der Verbindung der allgemeinen Formel (IV) und 3 bis 50 Gew.-% der Verbindung der allgemeinen Formel (V), eingesetzt. In der ersten Stufe erfolgt keine Wasserzugabe.

Durch die erfindungsgemäße Verwendung von cyclischen, also nur D-Einheiten aufweisenden, Polyorganosiloxanen in der ersten Stufe, gelingt es, einen vor allem technisch ohne weiteres beherrschbaren Gehalt an OH-Gruppen aufweisenden Verbindungen, wie insbesondere Wasser zuzulassen. Das eingesetzte Amino- und Alkoxygruppen aufweisende, monomere und/oder dimere Silan wird gemeinsam mit dem D-Einheiten aufweisenden Siloxan äquilibriert, was dazu führt, daß die Anzahl der kondensationsfähigen Alkoxygruppen pro Molekül zwar erhalten bleibt, diese dabei aber räumlich weiter auseinander angeordnet werden. Damit ist es möglich, schon in der ersten Stufe in Gegenwart von Wasser zu arbeiten, ohne hochviskose oder gelartige Produkte zu erhalten. Weiterhin bringt ein definierter Zusatz von OH-Gruppen aufweisenden Verbindungen in der ersten Stufe den Vorteil, gezielt die Hydrolyse-/Kondensationsreaktion einzuleiten, welche dann in der zweiten Stufe beendet wird.

In der zweiten Stufe werden zu dem erhaltenen Reaktionsgemisch Wasser und lineares, M-Einheiten aufweisendes Polyorganosiloxan gegeben, ein nochmalige Zusatz von basischem Katalysator ist zwar nicht erforderlich, kann jedoch erfolgen. Die Reaktion kann im gleichen Reaktionsgefäß durchgeführt werden. Es ist jedoch auch möglich, zwei verschiedene Reaktoren zu verwenden. Das Reaktionsgemisch wird während der Zugabe erhitzt, wobei kontinuierlich gebildeter Alkohol und überschüssiges Wasser entfernt werden. Nach Abschluß der Reaktion können, die auf Grund des Reaktionsgleichgewichtes gebildeten cyclischen Polyorganosiloxane ebenfalls entfernt werden, dies ist jedoch nicht unbedingt erforderlich.

Die Reaktion, sowohl in der ersten als auch in der zweiten Stufe, ist beendet, wenn keine Viskositätsänderung mehr zu beobachten ist.

Das erhaltene Endprodukt kann bei Bedarf abschließend in einer dritten Stufe nochmals einer basisch katalysierten Äqulibrierung mit Organopolysiloxanen unterzogen werden, um auf die gewünschte Viskosität bzw. den gewünschten Amingehalt im Aminosiliconöl, bevorzugt sind 0,001 bis 1 meg/g, einzustellen.

Durch die erfindungsgemäße Verfahrensweise gelingt es, insbesondere bei Verwendung der dimeren Aminosilane, Endprodukte der allgemeinen Formel (VI) zu erhalten:

R₃Si-O-[SiR₂-O]ₓ [SiRR^{N}O]_{y} - [SiRQO]_{z} - SiR₃ (VI)

worin R und R² die oben angegebene Bedeutung haben, R⁴ Wasserstoff oder Kohlenwasserstoffreste, z. B. n-Alkylreste mit 1 bis 20 Kohlenstoffatomen, wie Methyl-, Ethyl-, Butyl-, Hexyl-, Cyclohexylreste; iso-Alkylreste mit 3 bis 20 Kohlenstoffatomen, wie Isopropyl- und Isoamylreste, sowie Alkylreste mit tertären Kohlenstoffatomen, wie tert.-Butyl und tert.-Pentyl, bedeuten, und
- R^{N} ein Rest der Formel: -(CR²₂)ₘ - [NH - (CR²₂)ₙ]ₚ- NH - R⁴
- und Q ein Rest der Formel: -(CR²₂)ₘ - [NH - (CR²₂)ₙ]ₚ- NH - (CR²₂)ₘ -*Si
- oder: -(CR²₂)ₘ - N [- (CR²₂)ₙ - NHR⁴] -*Si
bedeuten, wobei *Si einer inter- oder intramolekulare Verknüpfungstelle zu einem Molekül der allgemeinen Formel (VI) darstellt.

Die Werte für x, y, und z sind so gewählt, daß im erfindungsgemäß hergestellten nichtreaktiven Aminosiloiconöl der Amingehalt 0,01 bis 20 meq/g, bevorzugt 0,05 bis 10,0 meq/g [Millequivalent pro g Polymer der allgemeinen Formel (VI)] beträgt, d. h. daß bei der Säure/Basen-Titration 1 g Polymer 0,01 bis 20 ml 1-molare Salzsäure verbraucht, und die Viskosität bei 25°C im Bereich von 20 bis 1.000.000 mm²/s, vorzugsweise im Bereich von 100 bis 20.000 mm²/s, liegt. Der Wert für z ist entweder 0 oder so groß, daß durchschnittlich weniger als eine Verknüpfungsstelle je Polymermolekül vorliegt.

Ein Beispiel tur zwei verknüpfte Polymermoleküle ist durch die allgemeine Formel (VII) dagestellt, wobei Me für Methyl steht und R^{N} beispielsweise einen Rest der Formel - (CH₂)₃ - NH - (CH₂)₂ - NH₂ darstellt:

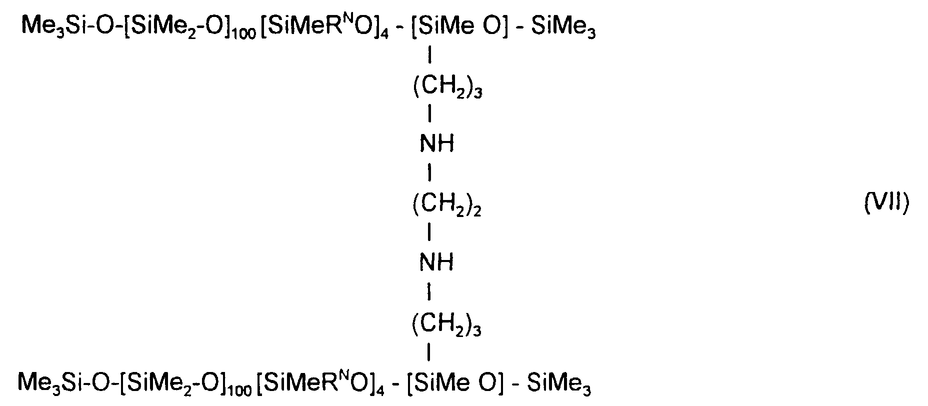

Die Amingruppen in den erfindungsgemäß hergestellten nichtreaktiven Aminosiliconölen können ganz oder teilweise als Amid- oder Imidgruppen vorliegen, z. B. nachdem aminische Reste mit Acetanhydrit umgesetzt wurden.

Mit dem erfindungsgemäßen Verfahren zur Herstellung von nichtreaktiven Aminosiliconölen durch basisch katalysierte Kondensation ist es möglich, in Gegenwart von OH-Gruppen haltigen Verbindungen wie Wasser zu arbeiten und trotzdem als Ausgangverbindung neben den monomeren Aminosilanen dimere Aminosilane zulassen, welche zwei Si-Atome mit kondensationsfähigen Gruppen aufweisen. Die erfindungsgemäß hergestellten nichtreaktiven Aminosiliconöle bzw. die daraus durch Äquilibrierung mit Polydimethylsiloxanen und/oder cyclischen Siloxanen hergestellten Produkte weisen extrem niedrige Gehalte an Si-OH-Gruppen auf, sind lagerstabil und können mit Erfolg u. a. als Trennmittel, Weichgriffmittel, Bestandteil von Polituren und kosmetischen Zubereitungen sowie zur Herstellung von Entschäumern eingesetzt werden. Dabei ist die Anwendung in Form von wäßrigen Emulsionen bevorzugt.

### Ausführungsbeispiele

### Beispiel 1

682 Gew.-Teile eines Gemisches aus cyclischen Siloxanen mit durchschnittlich 4 bis 5 Dimethylsiloxaneinheiten, 38 Gew.-Teile eines Silans der Formel CH₃(CH₃O)₂-Si-C₃H₆-NHC₂H₄-NH₂ und 4 Gew.-Teile eines Silans der Formel CH₃(CH₃O)₂-Si-C₃H₆-NHC₂H₄-NH C₃H₆-Si-(CH₃O)₂-CH₃ wurden mit 0,9 Gew.-Teilen KOH und 2,7 Gew.-Teilen Wasser vermischt und unter Rühren 6 h auf 140 bis 150 °C erhitzt. Danach wurden mit einem Tropftrichter nacheinander 10 Gew.-Teile Wasser und 20 Gew.-Teile eines trimethylsiloxyterminierten Polydimethylsiloxans einer Viskosität bei 25°C von 20 mm²/s zugegeben. Nach vierstündigem Erhitzen, Neutralisation mit Essigsäure und Abdestillation von Flüchtigen wurde ein Öl mit einer Viskosität von 4.200 mm²/ s und einem Amingehalt von 0,27 meq/g erhalten.

### Beispiel 2

650 Gew.-Teile Octamethylcyclotetrasiloxan, 380 Gew.-Teile eines Silans der Formel CH₃(C₂H₅O)₂-Si-C₃H₆-NHC₂H₄-NH₂ und 40 Gew.-Teile eines Silans der Formel CH₃(C₂H₅O)₂-Si-C₃H₆-NHC₂H₄-NH C₃H₆-Si-(C₂H₅O)₂-CH₃ wurden mit 0,9 Gew.-Teilen KOH und 2,7 Gew.-Teilen Ethanol vermischt und unter Rühren 4 h auf 140 bis 150°C erhitzt. Danach wurden mit einem Tropftrichter nacheinander 102 Gew.-Teile Wasser und 337 Gew.-Teile eines trimethylsiloxyterminierten Polydimethylsiloxans einer Viskosität bei 25 °C von 10 mm²/s zugegeben. Nach vierstündigem Erhitzen (Abdestillation von Wasser und Ethanol) wurde ein Öl mit einer Viskosität von 243 mm²/ s und einem Amingehalt von 3,1 meq/g erhalten.

24 Gew.-Teile dieses Reaktionsproduktes wurden mit 250 Gew.-Teilen cyclischen Siloxanen mit durchschnittlich 4 bis 5 Dimethylsiloxaneinheiten und 16 Gew.-Teilen eines eines trimethylsiloxyterminierten Polydimethylsiloxans einer Viskosität bei 25 °C von 50 mm²/s über 8 h in Gegenwart von 0,02 Gew.-Teilen KOH equlibriert. Nach Neutralisation mit Essigsäure und Abdestillation der flüchtigen Bestandteile wurde ein Aminosiliconöl mit einer Viskosität von 3.500 mm²/s und einem Amingehalt von 0,25 meq/g erhalten.

### Beispiel 3

230 Gew.-Teile eines Gemisches aus cyclischen Siloxanen mit durchschnittlich 4 bis 5 Dimethylsiloxaneinheiten, 35 Gew.-Teile eines Silans der Formel CH₃(CH₃O)₂-Si-C₂H₄CH(CH₃)-NHC₂H₄-NH₂ und 1 Gew.-Teil eines Silans der Formel CH₃(CH₃O)₂-Si-C₂H₄CH(CH₃)-NHC₂H₄-NH-CH(CH₃)-C₂H₄ Si-CH₃(CH₃O)₂ wurden mit 0,5 Gew.-Teilen KOH und 1,5 Gew.-Teilen Wasser vermischt und unter Rühren 4 h auf 140 bis 150°C erhitzt. Danach wurden mit einem Tropftrichter nacheinander 10 Gew.-Teile Wasser und 140 Gew.-Teile eines trimethylsiloxyterminierten Polydimethylsiloxans einer Viskosität bei 25 °C von 350 mm²/s zugegeben. Nach vierstündigem Erhitzen, Neutralisation mit Essigsäure und Abdestillation von Flüchtigen wurde ein Öl mit einer Viskosität von 3.000 mm²/ s und einem Amingehalt von 0,56 meq/g erhalten.

### Beispiel 4

500 Gew.-Teile eines Gemisches aus cyclischen Siloxanen mit durchschnittlich 4 bis 5 Dimethylsiloxaneinheiten, 20 Teile des linearen Anteils des Hydrolysates von Dimethyldichlorsilan, 50 Gew.-Teile eines Silans der Formel CH₃(CH₃O)₂-Si-C₃H₆-NH₂ und 3 Gew.-Teile eines Silans der Formel CH₃(CH₃O)₂-Si-C₃H₆-NH-C₃H₆-Si-(CH₃O)₂-CH₃ wurden mit 10 Teilen Tetrabutylphosphoniumsiloxanolat vermischt und unter Rühren 10 h auf 90 bis 100 °C erhitzt. Danach wurden mit einem Tropftrichter nacheinander 10 Gew.-Teile Wasser und 30 Gew.-Teile eines trimethylsiloxyterminierten Polydimethylsiloxans einer Viskosität bei 25 °C von 10 mm²/s zugegeben. Nach vierstündigem Erhitzen beif 100 °C, Zersetzung des Katalysators bei 170 °C und Abdestillation von Flüchtigen wurde ein Öl mit einer Viskosität von 990 mm²/ s und einem Amingehalt von 0,4 meq/g erhalten.

### Beispiel 5

500 Gew.-Teile eines Gemisches aus cyclischen Siloxanen mit durchschnittlich 4 bis 5 Dimethylsiloxaneinheiten, 50 Teile des linearen Anteils des Hydrolysates von Dimethyldichlorsilan, 60 Gew.-Teile eines Silans der Formel CH₃(CH₃O)₂-Si-C₃H₆-NHC₂H₄-NH₂ und 6 Gew.-Teile eines Silans der Formel CH₃(CH₃O)₂-Si-C₃H₆-NHC₂H₄-NH C₃H₆-Si-(CH₃O)₂-CH₃ wurden mit 10 Teilen Tetrabutylphosphoniumsiloxanolat vermischt und unter Rühren 10 h auf 90 bis 100 °C erhitzt. Danach wurden mit einem Tropftrichter nacheinander 10 Gew.-Teile Wasser und 30 Gew.-Teile eines trimethylsiloxyterminierten Polydimethylsiloxans einer Viskosität bei 25°C von 10 mm²/s zugegeben. Nach vierstündigem Erhitzen bei 100 °C, Zerssetzung des Katalysators bei 170°C und Abdestillation von Flüchtigen wurde ein Öl mit einer Viskosität von 1300 mm²/ s und einem Amingehalt von 0,9 meq/g erhalten.

### Beispiel 6

1000 Gew.-Teile eines Gemisches aus cyclischen Siloxanen mit durchschnittlich 4 bis 5 Dimethylsiloxaneinheiten, 20 Gew.-Teile eines Silans der Formel C₂H₅(CH₃O)₂-Si-C₃H₆-NHC₂H₄-NH₂, 2 Teilen eines Silans der Formel (CH₃O)₃-Si-C₃H₆-NHC₂H₄-NH₂ und 2 Gew.-Teile eines Silans der Formel C₂H₅(CH₃O)₂-Si-C₃H₆-NHC₂H₄-NH C₃H₆-Si-(CH₃O)₂-C₂H₅ wurden mit 4,5 Gew.-Teilen einer 40%igen wäßrigen KOH vermischt und unter Rühren und Beschleierung mit Stickstoff 8 h auf 150 °C erhitzt. Danach wurden mit einem Tropftrichter nacheinander 200 Gew.-Teile Wasser und 200 Gew.-Teile eines trimethylsiloxyterminierten Polydimethylsiloxans einer Viskosität bei 25 °C von 50 mm²/s zugegeben. Nach vierstündigem Erhitzen, Neutralisation mit Essigsäure und Abdestillation von Flüchtigen wurde ein Öl mit einer Viskosität von 7200 mm²/ s und einem Amingehalt von 0,18 meq/g erhalten.

### Beispiel 7

500 Gew.-Teile eines Gemisches aus cyclischen Siloxanen mit durchschnittlich 4 bis 5 Dimethylsiloxaneinheiten, 100 Gew.-Teile eines Silans der Formel CH₃(C₂H₅O)₂-Si-C₃H₆-NHC₂H₄-NH-C₄H₉ und 1 Gew.-Teile eines Silans der Formel CH₃(CH₃O)₂-Si-C₃H₆-NHC₂H₄-NH C₃H₆-Si-(CH₃O)₂-CH₃ wurden mit 10 Gew.-Teilen einer 20%igen wäßrigen Lösung von Tetramethylammoniumhydroxid vermischt und unter Rühren auf 80 °C erhitzt, bis keine Viskositätsänderung mehr eintrat. Anschließend wurden nacheinander 100 Gew.-Teile Wasser und 200 Gew.-Teile eines trimethylsiloxyterminierten Polydimethylsiloxans einer Viskosität bei 25 °C von 20 mm²/s zugegeben. Nach sechsstündigem Erhitzen, Zersetzung des Katalysators bei 150 °C und Abdestillation von Flüchtigen wurde ein Öl mit einer Viskosität von 95 mm²/ s und einem Amingehalt von 1,4 meq/g erhalten.

### Anwendungsbeispiel

18 Gew.-Teile des nach Beispiel 1 hergestellten nichtreaktiven Aminosiliconöls wurden mit 10 Gew.-Teilen eines Gemisches aus 5 Gew.-Teilen eines C₁₃-Oxoalkohols mit 7 Ethylenoxideinheiten und 5 Teilen eines C₉₋₁₁-Oxoalkohols mit 3 Ethylenoxideinheiten und 2 Propylenoxideinheiten, 20 Gew.-Teilen Wasser und 3 Gew.-Teilen Tristrimethylolpropan vermischt. Dann wurden 49 Gew.-Teile Wasser innerhalb von 5 min kontinuierlich zudosiert. Abschließend wurden 0,4 Gew.-Teile Eisessig zugegeben. Es wurde eine klare, niedrigviskose Microemulsion mit einer Teilchengröße von 11 nm erhalten. Diese ergab bei der Anwendung (Labor-Foulard, Flotte mit 25 g/l) auf Baumwoll-Polyester-Mischgewebe einen hervorragenden Weichgriff.

## Patentansprüche

1. Verfahren zur Herstellung von nichtreaktiven Aminosiliconölen durch basisch katalysierte Äquilibrierung, dadurch gekennzeichnet, daß
in einer ersten Stufe
mindestens eine siliciumorganische Verbindung der allgemeinen Formel
(R)ₐ(R¹O)₃₋ₐ - Si - (CR²₂)ₘ - [N R³ - (CR²₂)ₙ ]ₚ- NR³₂ (I),
wobei R unabhängig voneinander einwertige, gesättigte und/oder ungesättigte Kohlenwasserstoffreste mit 1 bis 20 Kohlenstoffatomen oder Arylreste mit 6 bis 20 Kohlenstoffatomen, R¹ unabhängig voneinander einwertige Alkylreste mit 1 bis 4 Kohlenstoffatomen, R² unabhängig voneinander gesättigte und/oder ungesättigte, substituierte und/oder unsubstituierte, lineare und/oder cyclische Kohlenwasserstoffreste mit 1 bis 30 Kohlenstoffatomen oder Wasserstoff R³ unabhängig voneinander Alkyl-, Cycloalkyl- und/oder Arylreste mit 1 bis 20 Kohlenstoffatomen oder Wasserstoff oder (R¹O)ₐ(R²)₃₋ₐ -Si - (CR²₂)ₘ - Gruppierungen bedeutet und a entweder 0 oder 1 ist, m und n unabhängig voneinander Werte von 1 bis 10 annehmen und p entweder 0, 1 oder 2 ist,
und/oder dessen Teilhydrolysate
mit mindestens einer cyclischen siliciumorganischen Verbindung der allgemeinen Formel
(R₂SiO)ₓ (II),
wobei R die oben angeführte Bedeutung hat und x durchschnitlliche Werte zwischen 3 und 10 annimmt,
in Gegenwart eines basischen Katalysators sowie
in Gegenwart mindestens einer OH-Gruppen aufweisenden Verbindung, wobei der Gesamtanteil an OH-Gruppen in der ersten Stufe, bezogen auf die in der allgemeinen Formel (I) enthaltenen (R¹O)-Gruppen, maximal 75 Mol-% beträgt,
umgesetzt wird und das erhaltene Reaktionsgemisch
in einer zweiten Stufe
mit mindestens einer siliciumorganischen Verbindung der allgemeinen Formel
R₃SiO(SiR₂)_{z}SiR₃ (III),
wobei R die oben angeführte Bedeutung hat und z durchschnittliche Werte zwischen 0 und 1.000 annimmt,
in Gegenwart von Wasser umgesetzt wird.

2. Verfahren nach Anspruch 1, dadurch gekennzeichnet, daß in der ersten Stufe als siliciumorganische Verbindung mindestens eine Verbindung der allgemeinen Formel
(R)ₐ(R¹O)_{b} - Si - (CR²₂)ₘ - [NH - (CR²₂)ₙ]ₚ - NH₂ (IV),
oder mindestens eine Verbindung der allgemeinen Formel
(R)ₐ(R¹O)_{b} - Si - (CR²₂)ₘ - [NH - (CR²₂)ₙ ]ₚ- NH - (CR²₂)ₘ - Si (R)ₐ(R¹O)_{b} (V)
oder deren Gemische eingesetzt werden.

3. Verfahren nach Anspruch 2, dadurch gekennzeichnet, daß ein Gemisch aus 50 bis 97 Gew.-% der Verbindung der allgemeinen Formel (IV) und 3 bis 50 Gew.-% der Verbindung der allgemeinen Formel (V) eingesetzt wird.

4. Verfahren nach Anspruch 1, dadurch gekennzeichnet, daß in der ersten Stufe als basischer Katalysator Alkali- und/oder Erdalkalihydroxide, Tetraalkylphosphoniumhydroxide und/oder Tetraalkylammoniumhydroxide sowie deren Silanolate und/oder Siloxanolate eingesetzt werden.

5. Verfahren nach Anspruch 1, dadurch gekennzeichnet, daß in der ersten Stufe der Gesamtanteil an OH-Gruppen, bezogen auf die in der allgemeinen Formel (I) enthaltenen (R¹O)-Gruppen, 3 bis 20 Mol.-% beträgt.

6. Verfahren nach Anspruch 1, dadurch gekennzeichnet, daß in der ersten Stufe die OH-Gruppen aufweisende Verbindung Wasser ist.

7. Verfahren nach Anspruch 1, dadurch gekennzeichnet, daß das Wasser in Form des Lösemittels des basischen Katalysators zugesetzt wird.

8. Verfahren nach Anspruch 1, dadurch gekennzeichnet, daß in der ersten Stufe die OH-Gruppen aufweisende Verbindung ein oligomeres Silanol ist.

9. Verfahren nach Anspruch 8, dadurch gekennzeichnet, daß als oligomeres Silanol der lineare Anteil des Dimethyldichlorsilan-Hydrolysates eingesetzt wird.

10. Verfahren nach Anspruch 1, dadurch gekennzeichnet, daß in der zweiten Stufe 0,1 bis 50 Gew.-% Wasser, bezogen auf das Reaktionsgemisch aus der ersten Stufe eingesetzt werden.

11. Verfahren zur Herstellung von nichtreaktiven Aminosiliconölen nach Anspruch 1, dadurch gekennzeichnet, daß in einer ersten Stufe ein Gemisch aus
mindestens einer Verbindung der allgemeinen Formel
(R)ₐ(R¹O)₃₋ₐ - Si - (CR²₂)ₘ - [NH - (CR²₂)ₙ]ₚ- NH₂ (IV)
und mindestens einer Verbindung der allgemeinen Formel
(R)ₐ(R¹O)₃₋ₐ - Si - (CR²₂)ₘ -[NH - (CR²₂)ₙ]ₚ- NH - (CR²₂)ₘ - Si (R)ₐ(R¹O)_{b} (V)
mit mindestens einer cyclischen siliciumorganischen Verbindung der allgemeinen Formel
(R₂SiO)ₓ (II)
in Gegenwart eines basischen Katalysators umgesetzt
und das erhaltene Reaktionsgemisch
in einer zweiten Stufe
mit 0,1 bis 50 Gew.-% Wasser, bezogen auf das Reaktionsgemisch aus der ersten Stufe, und mindestens einer siliciumorganischen Verbindung der allgemeinen Formel
R₃SiO(SiR₂)_{z}SiR₃ (III),
wobei R die oben angeführte Bedeutung hat und z durchschnittliche Werte zwischen 0 und 200 annimmt,
umgesetzt wird,
wobei die Reste R und R¹ Methyl- oder Ethylgruppen und die Reste R² Methylgruppen oder Wasserstoff bedeuten.
